# EUROPEAN PATENT APPLICATION

(11) **EP 2 654 014 A1**
(43) Date of publication of application: **23.10.2013**
(21) Application number: 11863704.0
(22) Date of filing: 07.12.2011
(51) Int. Cl.: G06Q 50/00

(54) **SAFETY MANAGEMENT SYSTEM FOR OBLIGATORY JOB SAFETY ANALYSIS AND METHOD FOR SAME**

(71) Applicant: Korea Gas Corporation, Gyeonggi-do 463-754 (KR)
(72) Inventor: YOON, Ik Keun, Ansan-si Gyeonggi-do 425-873 (KR); OH, Shin-Kyu, Seoul 138-912 (KR); CHOI, Sang Man, Yongin-si Gyeonggi-do 448-990 (KR); LEE, Jae-Jin, Seoul 135-090 (KR); LEE, Bong-Young, Yongin-si Gyeonggi-do 448-990 (KR); SON, Wha-Seung, Ansan-si Gyeonggi-do 425-882 (KR)
(74) Representative: Zinkler, Franz
(86) International application number: PCT/KR2011/009435
(87) International publication number: WO 2013/085080

(57) **Abstract**

The present invention relates to a safety management system including a JSA draw-up module configured to display a screen for drawing up a job safety analysis worksheet for job safety analysis (JSA) and to draw up the job safety analysis worksheet on the basis of the information inputted by a user; a storage module configured to store the job safety analysis worksheet drawn up by the JSA draw-up module into a database (DB) and to store task hazard information drawn up for each unit task that can be referred for the job safety analysis worksheet into a database; and a inventory module configured to manage the job safety analysis worksheet and the task hazard information stored in the storage module and to create a new job safety analysis worksheet and new task hazard information in accordance with a request from the JSA draw-up module, and a method thereof.

## Description

### TECHNICAL FIELD

The present invention relates to a safety management system configured to perform job safety analysis and a method thereof, and more particularly, to a safety management system that can easily perform job safety analysis for previously estimating hazards in each part of a job and take measures to control hazards, and a method thereof.

### BACKGROUND ART

In the gas and petrochemical industries, handling combustibles and toxic substances on a large scale, inspection and maintenance are a very important factor for ensuring safety of the workers and the plant.

Various reports and accident statistics say that mistakes in inspection and maintenance are key factors in accidents that cause significant losses in addition to damage to the plant. Therefore, a permit-to-work (PTW) system that secures safety is a very important function in the prevention of accidents. The most important function of the PTW system is to prevent accidents by addressing potential hazards before doing a job such that workers and managers use them in safety management.

Since errors may cause direct damage to workers or may potentially cause a large-scale accident, this is controlled by a PTW system, which is a key part of a safety management system (SMS). It is a primary function of the safety management system (SMS) to reduce hazards and improve safety by checking and estimating hazards, taking measures, and repeatedly and continuously carrying out examinations and testing its performance. Therefore, the PTW system that controls most types of jobs is a area that should be applied in the optimal way.

The PTW system is a written process and a system configured to give people, who perform a specific job, authority and responsibility at specific points in time, and expresses hazards and matters that demand special attention which relates to the job. Ultimately, the PTW system prevents accidents by systematically expressing the responsibility of all people including workers, managers, and supervisors who are in connection with a job, and preparation for safely performing the job.

Therefore, the most important reference for determining the usability of the PTW system is to present potential hazards related to a job such that workers and managers refer to them before doing a job.

Recently, the PTW system has been developed to a computer-based permit-to-work system from a paper-based permit system with job efficiency significantly improving. However, the PTW system is not sufficient yet in terms of providing hazard information.

The form of the PTW system is designed in consideration of specific features of companies and its specific jobs. The hazard information provided is a hazard list, PPE (Personal Protection Equipment), and specific precautions.

Generally, the information on hazards and precautions is provided with a checklist constructed in advance or a job safety analysis (JSA) worksheet data arranged in advance.

A system is configured to search an accident database and reports on the basis of the information on the nature of the jobs, its machines, and substances used. This standard is an example of providing hazard information, but the system has failed to be actually used in a company.

Therefore, the methods of the related art do not sufficiently examine hazards before starting a job and create inefficiency due to the time and efforts lost.

Meanwhile, workers are also unwilling to perform JSA for permission for each job, particularly, in doing familiar jobs. Realistically, most jobs performed in a plant are under job permission, such that the worker may resist performing the JSA and job inefficiency may then increase. Therefore, and accordingly, it was difficult to compulsorily apply the JSA.

### SUMMARY OF THE INVENTION

An exemplary embodiment of the present invention is directed to provide a safety management system configured to make it possible to devleop information on task hazards, which were inputted individually by a user in the related art, and extract and automatically input the information registered on task hazard DB when performing job safety analysis later on, and a safety management method.

Another exemplary embodiment of the present invention is directed to provide a safety management system configured to make it possible to construct an existing JSA worksheet into a DB, then extract and automatically input the information registered on the JSA worksheet DB when performing job safety analysis later, and a safety management method.

Another exemplary embodiment of the present invention is directed to provide a safety management system configured to easily perform job safety analysis by making it possible to extract and automatically input the information registered on task hazard DB and a JSA worksheet DB in job safety analysis.

According to an embodiment of the presnet invention, there is provided a safety management system for mandatory job safety analysis including: a JSA drawing-up module configured to display a screen for drawing up a job safety analysis worksheet for job safety analysis (JSA) and to draw up the job safety analysis worksheet on the basis of the information inputted by a user; a storage module configured to store the job safety analysis worksheet drawn up by the JSA drawing-up module into a database (DB) and to store task hazard information drawn up for each unit task that can be referred to the job safety analysis worksheet into a database; and a inventory module configured to manage the job safety analysis worksheet and the task hazard information stored in the storage module and to create a new job safety analysis worksheet and new task hazard information in accordance with a request from the JSA draw-up module.

The storage module may include: a task hazard DB configured to store the task hazard information into a database; and a registration JSA DB configured to store the job safety analysis worksheet into a database.

The inventory module may include: a hazard creating unit configured to create new task hazard information in accordance with a request from the JSA draw-up module; and a registration JSA creating unit configured to create a new job safety analysis worksheet in accordance with a request from the JSA draw-up module.

The inventory module may further include: a hazard approving unit configured to performs a request for registration when the user requests registration of the task hazard information, and store that information of which the request for registration is approved into the task hazard DB; and a registration JSA approval unit configured to performs a request for registration when the user requests registration of the drawn-up job safety analysis worksheet and stores the job safety analysis worksheet of which the request for registration is approved into registration JSA DB.

The JSA draw-up module may search the task hazard DB or the registration JSA DB, and searching the registration JSA DB may be permitted to be accessed by at least any one of a permit-to-work (PTW) system or a safety management system. The permission of access may be approved only for a predetermined job that is set in advance.

According to another embodiment of the presnet invention, there is provided a safety management method for mandatory job safety analysis including: displaying a screen for drawing up a job safety analysis worksheet for job safety analysis (JSA) by using a JSA draw-up module; determining whether to search a registration JSA DB in accordance with whether a corresponding job is an object of the registration JSA; extracting information from a corresponding registration JSA and inserting the information into a JSA item that is being drawn up, when the corresponding job is an object of the registration JSA and when the registration JSA to be referred to exists by searching the registration JSA DB; adding or changing to fit the corresponding job through examination of each task hazard by a user; determining whether the input task hazard is a task hazard that is to be registered; and performing a request for registration when it is determined that the task hazard is a task hazard that deserves to be registered, and, if not, completing the job safety analysis worksheet on the basis of the inputted information.

The method may further include registering task hazards on a task hazard DB, when the request for registration is approved. Further, whether the corresponding job is an object of the registration JSA may be determined in advance.

The method may further include: enumerating all task lists on a JSA drawing-up screen and selecting at least one task from the task lists, when the corresponding job is an object of the registration JSA; checking at least one hazard, a control, and a pre-risk for a task selected by a user; searching the task hazard DB; selecting, adding or editing a corresponding hazard from the JSA items that is being drawn up, when a hazard that needs to be referred exists, and determining whether there is another hazard when a hazard that deserves to be referred does not exist; and returning to a process of selection a related task or a process of checking of at least one of the corresponding hazard, a measure against the hazard, and a pre-risk of there being another hazard, performing a request for registration when there is a hazard that deserves to be registered by determining whether there is a hazard that deserves to be registered, and completing the job safety analysis worksheet on the basis of the input information when there is no hazard that deserves to be registered.

The method may further include registering the drawn-up job safety analysis worksheet on the registration JSA DB, when the request for registration of the job safety analysis worksheet is approved.

### BRIEF DESCRIPTION OF THE DRAWINGS

Fig. 1 is a configuration block diagram illustrating the configuration of a safety management system for mandatory job safety analysis in accordance with an exemplary embodiment of the present invention.

Fig. 2 is an exemplary diagram illustrating the structure of the task hazard DB in accordance with an exemplary embodiment of the present invention.

Fig. 3 is an exemplary diagram illustrating a JSA draw-up screen that is applied when the job safety analysis is performed in accordance with an exemplary embodiment of the present invention.

Fig. 4 is an exemplary diagram showing a JSA list that was registered already on a registration JSA DB on the JSA draw-up screen in accordance with an exemplary embodiment of the present invention.

Fig. 5 is a flowchart illustrating a process of performing a job safety analysis in a PTW system in accordance with an exemplary embodiment of the present invention.

Fig. 6 is a flowchart illustrating a process of drawing up a registration JSA for a specific job in accordance with an exemplary embodiment of the present invention.

### DETAILED DESCRIPTION

Hereinafter, exemplary embodiments of a safety management system that can easily perform a job safety analysis in accordance with the present invention will be described with reference to accompanying drawings. The thickness of lines and the size of components illustrated in the drawings may be exaggerated herein for clear and convenient description.

Further, the following terminologies are defined in consideration of the functions in the present invention and may be construed in different ways by the intention of users and operators. Therefore, the definition of the terminologies should be made on the basis of the description of the specification.

Further, the following exemplary embodiments do not limit the scope of the present invention and are only examples of the components described in claims, and exemplary embodiments included in the scope of the present invention throughout the specification and including components that can be replaced as equivalents in the components of claims may be included in the scope of the present invention.

Hereinafter, embodiments of the present invention will be described in detail with reference to the accompanying drawings.

Hereinafter, an embodiment of the present invention will be described in detail with reference to the accompanying drawings.

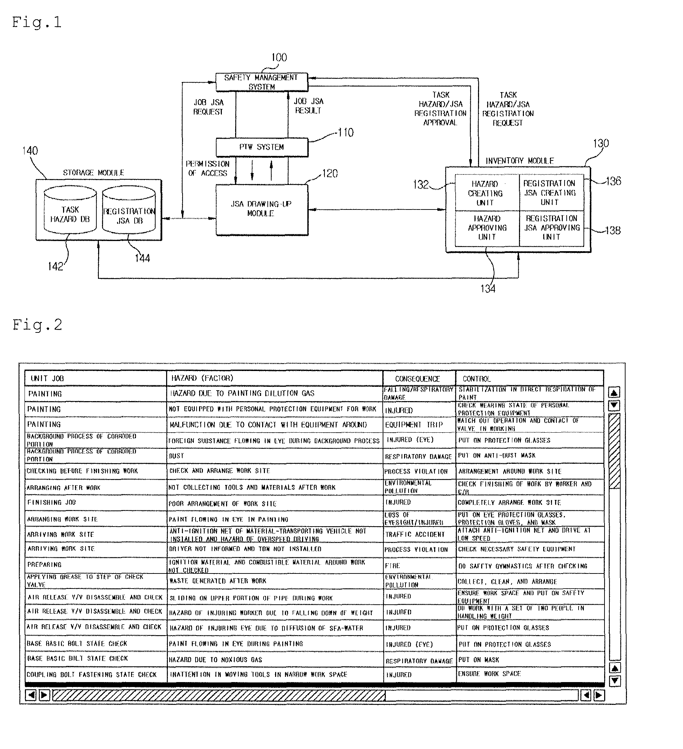

Fig. 1 is a configuration block diagram illustrating the configuration of a safety management system for mandatory job safety analysis in accordance with an exemplary embodiment of the present invention.

As illustrated in Fig. 1, a safety management system 100 according to an exemplary embodiment of the present invention includes a PTW system 110, a JSA draw-up module 120, an inventory module 130, and a storage module 140.

In this configuration, the inventory module 130 includes a hazard creating unit 32, a hazard approving unit 134, a registration JSA creating unit 136, and a registration JSA approval unit 138.

The storage module 140 includes a task hazard DB 142 and a registration JSA DB 144. Hazard information applied to each task that can be referred to for drawing-up the JSA, that is, applied to a unit task is stored for each task in the task hazard DB 142.

In the registration JSA DB 144, a plurality of different job safety analysis worksheets (hereafter, referred to as a 'JSA sheet') are stored and the list information on a plurality of JSA sheet may also be stored. The list information on the JSA sheet stored in the registration JSA DB 144 may be used to search data for drawing up a new JSA sheet later.

The hazard information on each task stored in the task hazard DB 142 may be stored as illustrated in the following [Table 1].

**[Table 1]**

| Unit task | Hazardous condition | consequence | control | PPE (personal protection equipment) | Pre-risk | | |
|---|---|---|---|---|---|---|---|
| | | | | | Pre-likel ihood | severity | Pre-risk |
| | | | | | | | |
| | | | | | | | |
| | | | | | | | |
| | | | | | | | |

That is, hazard, consequence, control, PPE (Personal Protection Equipment), and pre-risk (pre-likelihood, severity, and pre-risk) are stored for each task.

New items may be added thereto and the input order of the items may be changed.

The unit task means having a subdivided task of a corresponding job for achieving the object of the corresponding job for a worker. The hazardous condition corresponds to direct/indirect reasons and environmental factors that are associated with the consequences, which refer to the types of accidents that may be caused by hazards when the unit tasks are performed.

The control may correspond to various measures for preventing the consequence or measure for reducing pre-risk. The PPE is the personal protection equipment for preventing such consequences.

Further, the pre-risk means the hazard information for a given accident that may be generated by hazards. The pre-likelihood means the possibility of a given consequence under the assumption that there is no measure. The severity refers to the fatality of the consequence. So Pre-risk means the riks under the assumption that there is no measure and the degree of combination of the pre-likelihood and severity.

Further, it may be possible to further include the types of plants operated as a large class, job enforcement fields such as a small class (for example, machines, relays, processes), the division information for types of jobs (for example, driving, repairing, and constructing), and the background for estimating hazards as an estimation route, as the information items for the unit tasks.

The following [Table 2] illustrates the hazards of a given unit task and input items such as information.

**[Table 2]**

| Input item | Description |
|---|---|
| Unit task | One individual task |
| Hazardous condition | Direct/indirect reason for accident |
| Consequence | Type of final accident that may occur when performing a job |
| Control | Measure for preventing consequence |
| PPE | Personal protection equipment |
| Pre-likelihood | Possibility without control |
| Severity | Damage scale of accident |
| Pre-risk | Degree of risk without control(measures) |
| Large class | Job enforcement field (for example, machines relays, processes) |
| Small class | |
| Job type | Job type classification information (for example, driving, repairing, and constructing) |
| Estimation route | Background of estimating a hazard |

Meanwhile, the JSA draw-up module 130 is driven when there is a request for drawing up a JSA sheet through the PTW system 110 from a user. The JSA draw-up module 120 makes a JSA drawing-up screen displayed by executing JSA draw-up software or calling JSA draw-up software from a server.

When task and hazard information for each task are inputted to the items on the initial screen for drawing up a JSA sheet, the JSA draw-up module 120 draws up a JSA sheet including the input information and calls and uses the information stored in the task hazard DB 142 and the registration DB 144 by searching the task hazard DB 142 and the registration DB 144 to draw up the JSA sheet.

The hazard creating unit 132 of the inventory module 130 creates the drawn-up task hazard as a new task hazard, when there is a request to create a new task hazard by the JSA draw-up module 120.

The hazard approval unit 134 requests approval for registration on the safety management system 100 when there is a request for registration by a user for the drawn-up task hazard, and when the request is approved by the safety management system 100, the approval is stored in the task hazard DB 142.

The registration JSA creating unit 136 of the inventory module 130 creates the drawn-up JSA sheet as a new registration JSA, when it is required to create a new registration JSA from the JSA draw-up module 120.

Meanwhile, when there is access to the registration JSA DB 144 of the JSA draw-up module 120, the PTW system determines whether the job to be drawn up is a job that can be referred to the registration DB 144, and performs permission to access. When the job to be drawn up is a job that cannot refer to the JSA DB 144, the PTW system 110 does not approve accession. The range of the job that refers to the registration JSA DB 144 is set in advance by the user or the manager, and for example, may be a prevention examination that is periodically performed.

Although it is described when the PTW system 110 approve permission of access to the registration JSA DB 144 in the present exemplary embodiment, it is not limited thereto and the approval may be implemented in the level of the safety management system 100, not the PTW system 110.

Further, the registration JSA approving unit 138 requests registration approval for the safety management system 100, when there is a request for registration of the user for the drawn-up JSA sheet, and when approval is given by the safety management system 110, the registration JSA approving unit 138 stores the approval on the registration JSA DB 144.

Fig. 2 is an exemplary diagram illustrating the structure of task hazard DB in accordance with an exemplary embodiment of the present invention.

As illustrated in Fig. 2, the task hazard DB 142 stores the unit tasks and stores hazard information for each unit task, with its corresponding consequences and controls.

In the safety management system according to an exemplary embodiment of the present invention, when a JSA sheet is drawn up by searching the pre-registered task hazard DB 132, the list in the task hazard DB 142 of Fig. 2 is shown to the user. When any one of the lists is selected by the user, the information of the corresponding list is extracted and inputted to the JSA draw-up screen.

For example, when the user selects `unit job: painting, hazard: a malfunction due to contact with nearby equipment, all hazard information related to each unit job: painting, hazard: malfunction due to contact with nearby equipment are extracted and inputted to the JSA draw-up screen.

Meanwhile, when new hazard information is inputted through the JSA draw-up screen, the new hazard information can then be registered on the task hazard DB 142 through approval of the safety management system 100.

For example, when new hazard information is inputted for 'painting' into unit tasks, a hazard, consequence, and control are inputted for 'painting' and are additionally registered onto the task hazard DB 142 through approval. In this process, the newly registered hazard information is also added to the task hazard DB 142.

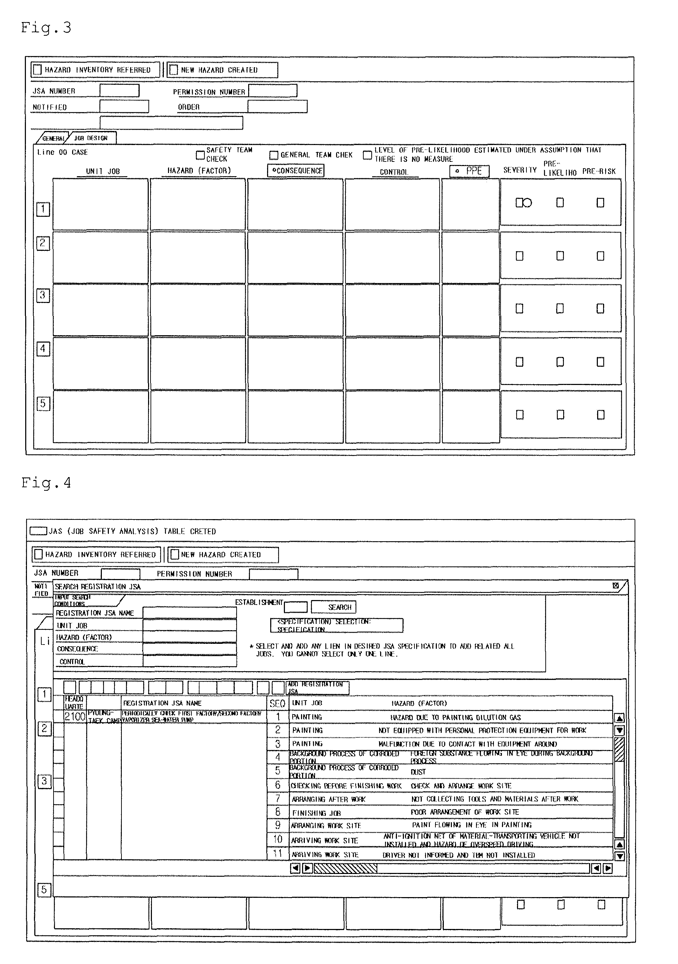

Fig. 3 is an exemplary diagram illustrating a JSA draw-up screen that is applied when job safety analysis is performed in accordance with an exemplary embodiment of the present invention.

As illustrated in Fig. 3, the JSA draw-up screen is provided with items for inputting the basic information and task information onto a JSA sheet. Further, it is also provided with an item for inputting task hazard information for each task.

In this process, the user may directly input the information on each items provided on the JSA draw-up screen and may refer to the hazard information stored in advance in the task hazard DB 142.

When the hazard information registered on the task hazard DB 142 is referred, the task hazard DB 142 is called and the related lists are shown to the user, and when at least one list is selected by the user, the hazard information of the selected list is extracted and the extracted information is automatically inputted to the corresponding item on the JSA draw-up screen.

Obviously, when the hazard information that the user wants to input for a corresponding task is not registered on the task hazard DB 142, a new hazard may be created and additionally registered to the task hazard DB 142 through approval of the safety management system 100.

As described above, in the safety management system that can easily perform the task safety analysis in accordance with an exemplary embodiment of the present invention, hazard information is registered for each task on the task hazard DB 142, such that the user does not need to input hazard information on the corresponding tasks one by one, thereby improving the JSA efficiency.

Fig. 4 is an exemplary diagram showing a JSA list that was registered already on the registration JSA DB on the JSA draw-up screen in accordance with an exemplary embodiment of the present invention.

That is, Fig. 4 illustrates an example of calling and automatically inputting pre-registered JSA on the registration JSA DB 144, for job safety analysis.

In other words, an example of extracting and automatically inputting hazard information corresponding to a unit job from the task hazard DB 142, for the unit task of a specific job, was described above, but Fig. 4 illustrates an example of extracting and automatically inputting a pre-registered registration JSA for a specific job.

When a command to search the registration JSA DB 144 is inputted through access permission of the PTW 110 on the JSA draw-up screen of Fig. 3, the pre-registered registration JSA list in the registration JSA DB is called and displayed on the screen, as illustrated in Fig. 4.

In this process, when any one registered JSA name is selected by the user, all information corresponding to the selected registration JSA name are extracted and inputted to the JSA draw-up screen.

For example, when 'checking first factory/second factory vaporizer sea-water pump' is selected by the user, unit task information registered for the 'check first factory/second factory vaporizer sea-water pump' and all of corresponding hazard information are extracted and inputted to the JSA drawing-up screen.

In this process, it is preferable to allow the user to change, delete, or add the contents of certain items, with the registration information on the selected registration JSA displayed on the JSP draw-up screen.

The operational flow of the safety management system 100 that can easily perform job safety analysis having the configuration described above in accordance with the present invention will be described in more detail below.

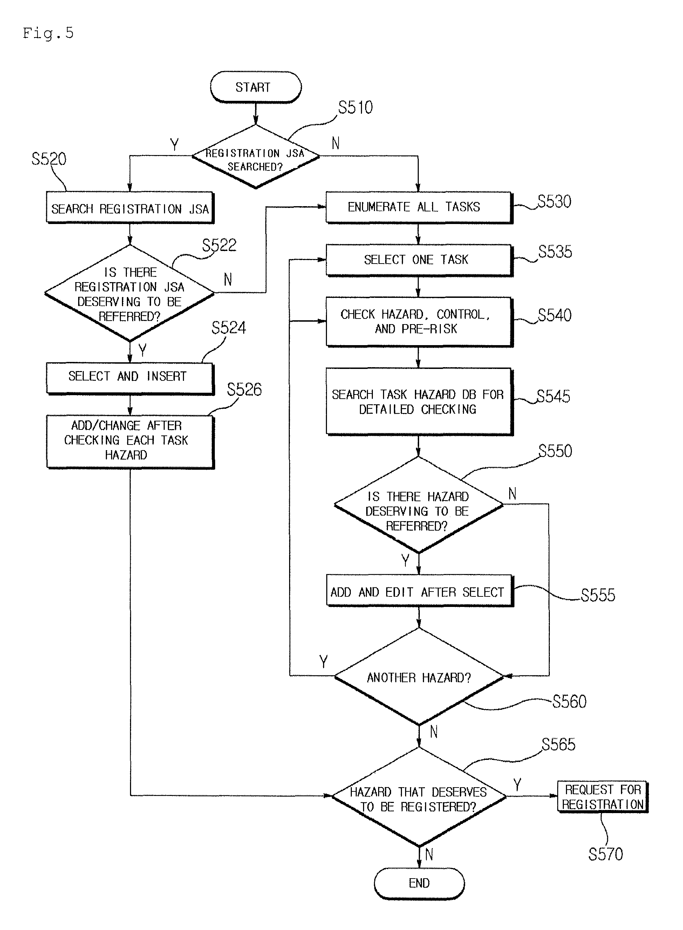

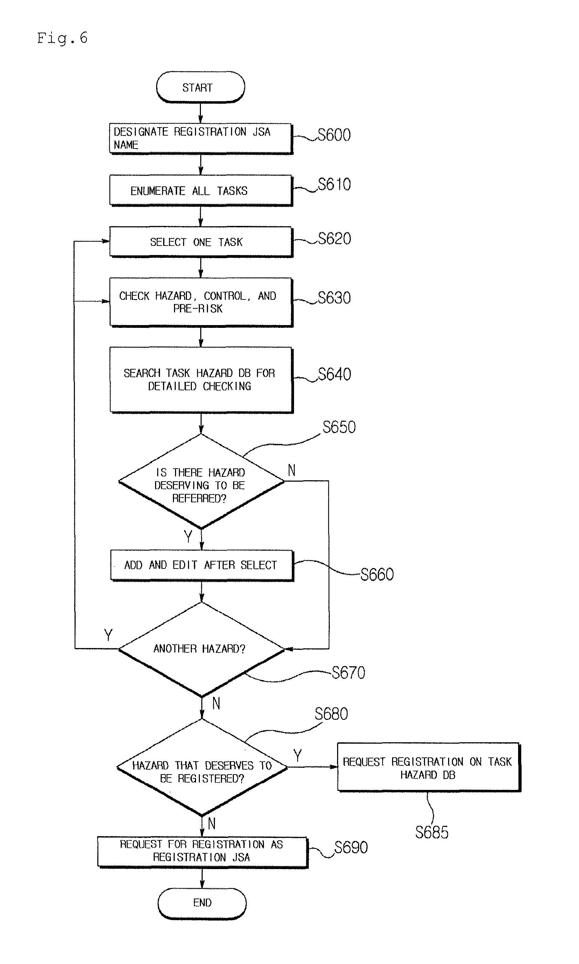

Fig. 5 is a flowchart illustrating a process of performing job safety analysis in a PTW system 110 in accordance with an exemplary embodiment of the present invention and Fig. 6 is a flowchart illustrating a process of drawing up a registration JSA for a specific job in accordance with an exemplary embodiment of the present invention.

The process of performing task safety analysis in the PTW system 110 in accordance with an exemplary embodiment of the present invention will be described first with reference to Fig. 5.

The safety management system that can easily perform task safety analysis in accordance with an exemplary embodiment of the present invention drives the JSA draw-up module 120 through the PTW system 110 such that the JSA draw-up screen is displayed, when there is a request for drawing up JSA, and determines whether to search the registration JSA DB 144 in accordance with whether the corresponding job corresponds to an object of the registration JSA (S510). Whether the job corresponds to an object of the registration JSA is set in advance by the user or the manager of the safety management system 110.

When the job is an object of the registration JSA, the PTW system 110 approve permission of access and the JSA draw-up module 120 searches the registration JSA DB 144 (S520), and then when there is registration JSA to be referred, as the search result, information is extracted from the corresponding registration JSA and inserted into the JSA item that is being drawn up (S524).

Thereafter, the task hazard is added or changed by examination of the user (S526) and it is determined that the hazard that deserves to be registered is inputted(S565).

As a result, when it is determined that the hazard deserves to be registered, it is created as a new hazard through the hazard creating unit 132 of the inventory module 130 while a request for registration is performed with the safety management system 100 through the hazard approval unit 134 of the inventory module 130, or if it is not, a JSA sheet is drawn up on the basis of the inputted information, there by completing the JSA sheet.

Thereafter, when the request for registration by the hazard approval unit 134 is approved by the safety management system 100, the hazard approval unit 134 registers the drawn-up task hazard on the task hazard DB 14t2 (not shown).

Meanwhile, when the corresponding job is not an object of the registration JSA, the PTW system 110 does not approve permission for access and all the task lists are enumerated on the JSA drawing-up screen (S530) and one task in the task list is selected (S535).

Thereafter, the hazard, the control, and the pre-risk about the task selected by the user are checked (S540) and the task hazard DB 142 is searched through detailed checking (S545).

As a result of the search, whether there is a hazard deserving to be referred exists (S550) and when there is a hazard, the corresponding hazard is selected and added to the JSA item that is being drawn up, or edited (S555), and the process proceeds to the step of determining whether there is another hazard (S560) when there is no hazard that deserves to be referred.

When there is no another hazard, the process returns to the step of selecting a related task (S535) or returns to a step of checking the corresponding hazard, a measure against the hazard, and the control (S540).

When there is no another hazard, it is determined whether it is a hazard that deserves to be registered (S565), and when the hazard deserves to be registered, the corresponding hazard is created as a new hazard through the hazard creating unit 132 of the inventory module 130 while a request for registration is performed on the safety management system 100 through the hazard approving unit 134 of the inventory module 130 (S570), and if it is not so, a JSA sheet is drawn up on the basis of the inputted information, thereby completing the JSA sheet.

Thereafter, when the request for registration performed by the hazard approval unit 1324 is approved by the safety management system 100, the hazard approval unit 134 registers the drawn-up task hazard on the task hazard DB 142 (not shown).

Next, the process of drawing up registration JSA for a specific job in accordance with an exemplary embodiment of the present invention will be described with reference to Fig. 6.

The object of a specific job is set by the user or the manager of the safety management system 100. As described above, a prevention examination job that is periodically performed may be an example of the specific job.

Drawing-up of the registration JSA for a specific job in accordance with an exemplary embodiment of the present invention is started by displaying a JSA draw-up screen and designating the name of the registration JSA on the screen, by driving the JSA drawing-up module 120 through the PTW system 110, when there is a request for drawing JSA (S600).

Thereafter, all tasks are enumerated (S610) and one of the tasks is selected (S620).

When the hazard, the control, and the pre-risk for the task selected in step 'S620' are checked (S630), the task hazard DB is searched in detail (S640).

As a result of the searching, whether there is a hazard deserving to be referred exists (S650) and when there is the hazard, a corresponding hazard is selected and added to the JSA item that is being drawn up, or edited (S660), and the process proceeds to a step of determining whether there is another hazard (S670) when there is no hazard that deserves to be referred.

When there is no other hazard, the process returns to the step of selecting a relating task by the user (S620) or returns to the step of checking the corresponding hazard, a measure against the hazard, and the control (S630).

If there is no another hazard, it is determined whether it is a hazard that deserves to be registered (S680), and when the hazard deserves to be registered, the corresponding hazard is created as a new hazard through the hazard creating unit 132 of the inventory module 130 while a request for registration is performed on the safety management system 100 through the hazard approval unit 134 of the inventory module 130 (S865). Thereafter, when the request for registration performed by the hazard approval unit 134 is approved by the safety management system 100, the hazard approval unit 134 registers the drawn-up task hazard on the task hazard DB 142 (not shown).

When the hazard does not deserve to be registered, a corresponding JSA sheet is newly created through the JSA creating unit 136 of the inventory module 130 and a request for registration of the JSA sheet created through the registration JSA approving unit 138 of the inventory module 130 is performed on the safety management system 100, thereby completing the registration.

Thereafter, the request for registration performed by the registration JSA approving unit 138 is performed by the safety management system 100, the registration JSA approving unit 138 registers the drawn-up JSA sheet on the registration JSA DB 144 (not shown).

The safety management system that can easily perform job safety analysis and a method thereof in accordance with the present invention have the advantage of making it possible to easily perform job safety analysis by extracting and automatically inputting the information registered on the task hazard DB and the task safety analysis worksheet DB when performing job safety analysis, such that it is possible to improve the efficiency of the permit-to-work system and perform effective job safety management.

According to the present invention, it is possible to remove the inconvenience of inputting the hazard information every time while performing job safety analysis, by extracting and automatically inputting the related information registered on the hazard DB when performing job safety analysis later, by constructing the hazard information into a DB.

Further, it is possible to make job safety analysis easier and improve efficiency by extracting and automatically inputting the related information registered on the job safety analysis worksheet when performing job safety analysis later, by constructing the job safety analysis worksheet that has been drawn up already into a DB.

Further, according to the present invention, it is possible to easily perform job safety analysis, improve efficiency of the permit-to-work system, and allow effective job safety management, by extracting and automatically inputting the related information registered in the hazard DB and the job safety analysis worksheet DB when performing job safety analysis.

Although a safety management system that can easily perform job safety analysis and a method thereof in accordance with the present invention are described above, the present invention is not limited to the exemplary embodiments described herein and the drawings and may be applied within a range of protecting the spirit of the present invention.

## Claims

1. A safety management system comprising:
a JSA drawing-up module configured to display a screen for drawing up a job safety analysis worksheet for job safety analysis (JSA) and to draw up the job safety analysis worksheet on the basis of the information inputted by a user;
a storage module configured to store the job safety analysis worksheet drawn up by the JSA draw-up module into a database (DB) and to store the task hazard information drawn up for each unit task that can be referred to the job safety analysis worksheet into a database; and
an inventory module configured to manage the job safety analysis worksheet and the task hazard information stored in the storage module and to create a new job safety analysis worksheet and new task hazard information in accordance with a request from the JSA drawing-up module.

2. The safety management system of claim 1, wherein the storage module includes: a task hazard DB configured to store the task hazard information into a database; and a registration JSA DB configured to store the job safety analysis worksheet into a database.

3. The safety management system of claim 2, wherein the inventory module includes:
a hazard creating unit configured to create new task hazard information in accordance with a request from the JSA draw-up module; and
a registration JSA creating unit configured to create a new job safety analysis worksheet in accordance with a request from the JSA drawing-up module.

4. The safety management system of claim 3, wherein the inventory module further includes: a hazard approving unit configured to performs a request for registration when the user requests registration of the drawn-up task hazard information, and store the task hazard information of which the request for registration is approved into the task hazard DB; and a registration JSA approval unit configured to perform a request for registration when the user requests registration of the drawn-up job safety analysis worksheet and store the job safety analysis worksheet of which the request for registration is approved for the registration JSA DB.

5. The safety management system of claim 2, wherein the JSA draw-up module can search the task hazard DB or the registration JSA DB, and searching the registration JSA DB is permitted to be accessed by either the permit-to-work (PTW) system or a safety management system.

6. The safety management system of claim 5, wherein the permission of access is approved only for a predetermined job that is set in advance.

7. A safety management method for mandatory job analysis, comprising:
displaying a screen for drawing up a job safety analysis worksheet for job safety analysis (JSA) by using a JSA drawing-up module;
determining whether to search a registration JSA DB in accordance with whether a corresponding job is an object of the registration JSA;
extracting information from a corresponding registration JSA and inserting the information into a JSA item that is being drawn up, when the corresponding job is an object of the registration JSA and when the registration JSA that deserves to be referred exist by searching the registration JSA DB;
adding or changing to fit the corresponding job through examination of each task hazard by a user;
determining whether the input task hazard is a task hazard that deserves to be registered; and
performing a request of registration when it is determined that the task hazard is a task hazard that deserves to be registered, and, if not so, completing the job safety analysis worksheet on the basis of the input information.

8. The method of claim 7, further comprising registering the task hazard on a task hazard DB, when the request for registration is approved.

9. The method of claim 7, wherein whether the corresponding job is an object of the registration JSA is determined in advance.

10. The method of claim 7, further comprising:
enumerating all of task lists on a JSA drawing-up screen and selecting at least one task in the task lists, when the corresponding job is an object of the registration JSA;
checking at least one of either a hazard, a control, or a pre-risk for a task selected by a user;
searching the task hazard DB;
selecting and adding or editing a corresponding hazard in a JSA item that is being drawn up, when a hazard that deserves to be referred exists, and determining whether there is another hazard when a hazard that deserves to be referred does not exist; and
returning to a process of selecting a related task or checking of at least one of the corresponding hazard, a measure against the hazard, and a pre-risk where there is another hazard, performing a request for registration when there is a hazard that deserves to be registered by determining whether there is a hazard that deserves to be registered, and completing a job safety analysis worksheet on the basis of the input information when there is no hazard that deserves to be registered.

11. The method of claim 10, further comprising registering the drawn-up task hazard on the task hazard DB, when the request for registration is approved.

12. A safety management method for mandatory job safety analysis, comprising:
displaying a screen for drawing up a job safety analysis worksheet for job safety analysis (JSA);
designating the name of a registration JSA;
enumerating all tasks and selecting one of the tasks;
checking at least one of a hazard, a control, or a pre-risk for the selected task;
searching a task hazard DB;
selecting and adding or editing a corresponding hazard in a JSA item that is being drawn up, when a hazard that deserves to be referred exists, and determining whether there is another hazard when a hazard that deserves to be referred does not exist;
returning to a process of selecting a related task by a user or checking of at least one of either the corresponding hazard, a measure against the hazard, or a pre-risk, where there is another hazard;
performing a request for registration when there is a hazard that deserves to be registered by determining whether there is a hazard that deserves to be registered, and performing a request for registration of the drawn-up job safety analysis worksheet when there is no hazard that deserves to be registered

13. The method of claim 12, further comprising registering the drawn-up task hazard on the task hazard DB, when the request for registration of the hazard is approved.

14. The method of claim 12, further comprising registering the drawn-up job safety analysis worksheet on the registration JSA DB, when the request for registration of the job safety analysis worksheet is approved.
